Europäisches Patentamt

European Patent Office          (11) Publication number:          0 304 520

Office européen des brevets                                         A1

(12)                          EUROPEAN PATENT APPLICATION

(21) Application number: 87307551.9          (51) Int. Cl.⁴: B65G 15/60

(22) Date of filing: 26.08.87

(43) Date of publication of application:
01.03.89 Bulletin 89/09

(84) Designated Contracting States:
AT BE CH DE ES FR IT LI LU NL SE

(71) Applicant: Habberley, Alan Anthony
38 Brookhouse Lane Kings Meadow
Featherstone Staffordshire(GB)

(72) Inventor: Habberley, Alan Anthony
38 Brookhouse Lane Kings Meadow
Featherstone Staffordshire(GB)

(74) Representative: Fry, Alan Valentine
FRY HEATH & CO. Seloduct House Station
Road
Redhill Surrey RH1 1NF(GB)

(54) Feedboot.

(57) A feedboot (10) for supporting the belt (15) of a troughed belt conveyor at a loading position comprises a pair of resiliently mounted half shells (13, 14) each supporting part of the width of the belt (15) and being arranged so that each half shell has independent resilient dipping movement towards the centre line (27) of the conveyor belt under load. The half shells (13, 14) are lined with low friction glide material (26) having friction generating edges (28) tapered inwardly towards the centre line (27) of the conveyor in the direction of use (7). Where the conveyor belt is loaded off centre at the feedboot (10), the dipping of the half shell supporting the excess load causes this to tumble towards a central position and also reduces friction on the belt at the heavily loaded side. Any wandering of the belt is therefore towards the heavy load rather than away from it.

FIG 1

## Feedboot

This invention relates to a feedboot for a troughed belt conveyor.

A troughed belt conveyor, commonly used for transporting lumpy loads such as rock, ore and coal, has a flexible continuous belt supported from beneath by stands of transverse rollers so that its load supporting surface adopts a trough-like cross section in use, the endless belt being arranged to return beneath the load supporting or feed run. A feedboot is provided at a portion of the belt where loads are deposited on the belt, for example from a hopper or from an adjacent conveyor.

The flexible conveyor belt is usually unsupported in the direction of movement between roll stands. It can therefore be deformed into the gaps between adjacent transverse roll stands, causing wear and possibly damaging the belt and causing turbulence in the load.

To contain dust and overspill from the feedboot, rubber skirts are usually used on feed hoppers for example. However these can add to the problem of belt damage if large lumps of load material are caught between the belt and the skirts, resulting in the lumps being ground against the moving belt.

There have been proposals to support the belt between the roll stands by resilient trough shaped plates, or to use resilient rollers to help absorb the shock loads at the feedboot. However, none of these proposals has been entirely satisfactory.

It has been found that, where the belt is loaded off centre, the resilient rollers or supports dip downwardly at the most heavily loaded point of the belt width. The remainder of the belt load then tends to topple into the hollow so formed. This reduces the frictional forces between the belt and its supports on the lightly loaded part of the belt width and increases the frictional forces on the heavily loaded part. The lightly loaded part of the belt may even be tightened from its normal curvature so as to lose contact entirely with the supports over parts of its width.

All these factors cause the belt to wander off line towards the lightly loaded part of the belt width. This must be avoided if possible, since it can lead to spillage, straining of the belt and damage to the belt edges, the most vulnerable part of the belt.

It is an object of the present invention to provide a feedboot for supporting a troughed belt conveyor at a feed region which overcomes or reduces some or all of these disadvantages.

According to the invention there is provided a feedboot comprising a pair of supporting structures, each adapted to support part of the width of a troughed conveyor belt and each having independent resilient mounting means so arranged that each supporting structure tends to dip downwardly towards the centre line of the conveyor belt under load.

Preferably only two supporting structures are provided, each adapted to support one half of the width of the troughed conveyor belt.

Each supporting structure may have a resilient mount disposed at or adjacent its outer edge away from the centre line of the conveyor.

Each supporting structure may have a resilient mount adjacent the centre line of the conveyor. In this case, the outer edge away from the centre line of the conveyor will have either a resilient mount as set out in the preceding paragraph or a pivotal mount.

The or each resilient mount may comprise a coiled compression or extension spring.

Alternatively, the or each resilient mount may include an elastomeric material.

Each supporting structure of the feedboot may have a generally elongate arcuate support surface of a low friction material.

The support surface of each supporting structure may comprise a plurality of elongate formations inclined towards the centre line of the conveyor belt in the intended direction of belt travel.

These elongate formations may comprise slots or alternatively may comprise grooves or depressions.

Two forms of feedboot embodying the present invention will now be described by way of example only with reference to the accompanying drawings in which;

FIGURE 1 is a transverse sectional view of a conveyor feedboot embodying the invention.

FIGURE 2 is a plan view of the feedboot of Figure 1.

FIGURE 3 is a transverse sectional view of an alternative form of feedboot embodying the invention on a reduced scale.

FIGURE 4 is a side elevational view, partly in section, of the feedboot of Figure 3.

FIGURE 5 is a plan view, partly broken away of the feedboot of Figures 3 and 4.

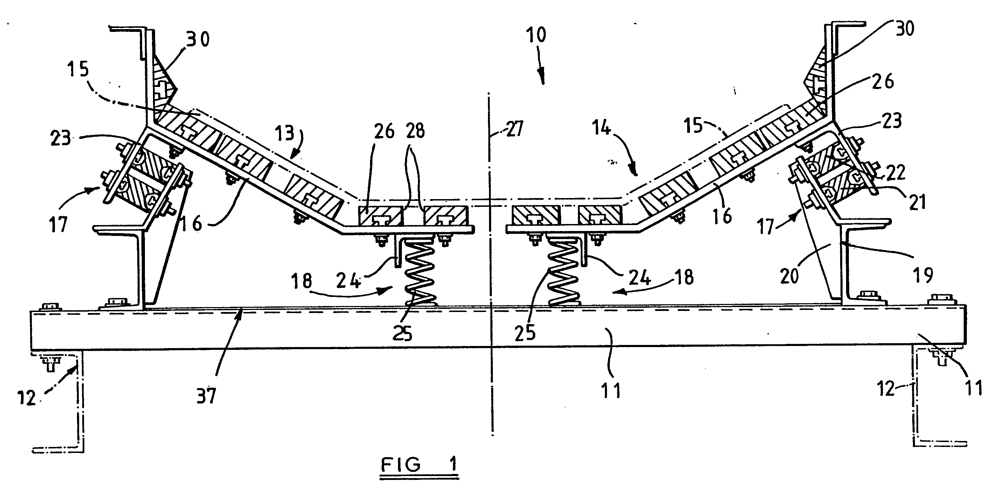

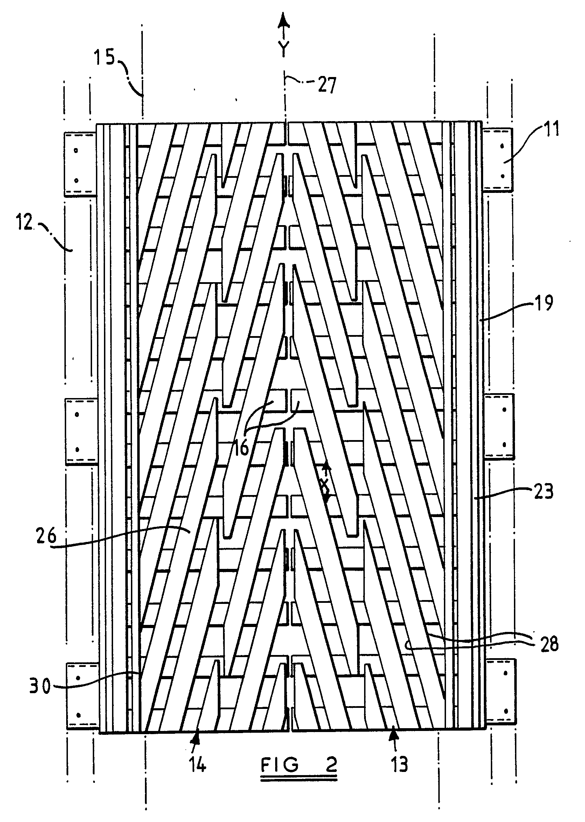

Referring firstly to the feedboot shown in Figures 1 and 2 of the drawings, this type of arrangement is intended for use as a conveyor for spoil or dirt, rock or other material. The feedboot is usually provided at an intake end of a run of a troughed belt conveyor of generally conventional type. The intake end is fed with load material from a hopper or from the discharge end of another conveyor for example. The feedboot, generally indicated at 10, is mounted on a support. The precise details of the support are unimportant and the feedboot of the present invention may therefore be used to replace an existing feedboot, using the existing supports. In the example shown in Figure 1 the support includes transverse support bars 11 which are themselves supported by beams 12 running in the same direction as the conveyor.

The feedboot 10 comprises two identical, mirror-image, elongate half shells, generally indicated at 13 and 14 in Figure 1. Each half shell supports one half of the conventional conveyor belt 15 and the shells are profiled so as to match or approximate to the troughed profile of the remainder of the conveyor belt load run.

Each half shell comprises a number of transverse ribs 16 which are supported from the transverse support bars 11 of the framework by edge mounts generally indicated at 17 and optionally by centre mounts generally indicated at 18.

Each edge mount 17 comprises a longitudinal support beam 19, a bracket 20 and a pair of resilient bushes 21 and 22 of generally known type. The resilient bushes are secured to a mounting bracket 23 in turn secured to the transverse ribs 16. It will therefore be seen that the outer edge of each half shell 13, 14, is mounted resiliently through the bushes 21 and 22 so as to be capable of some degree of resilient rocking or pivoting movement about the edge mount 17.

The centre mount 18 comprises an angle section 24 resiliently supported by a coiled compression spring 25.

The centre mount could be omitted entirely where only relatively lightweight material is to be carried by the conveyor or could be replaced by an elastomeric buffer or bush.

The belt supporting surface of the feedboot can best be seen from Figure 2 of the drawings and comprises a number of individual support glides 26, which are made of a low friction abrasion resistant material such as heavy duty plastics material, or metal.

It is preferred, though not essential, that glides 26 are not aligned with the direction of movement of the belt which is indicated by the arrow Y in Figure 2. The glides 26 converge towards the centre line 27 of the feedboot considered in the direction of movement of the belt. The gap X between the edges 28 of adjacent glides is sufficiently narrow that any mechanical belt fastener used for securing belt ends together or splicing the belt in conventional manner will not enter the gap X between adjacent glides but will in all events bridge over the gap. The edges 28 are therefore so closely spaced that the conveyor belt indicated in chain dotted lines at 15 in Figure 1, will not dip into the gap between these glide edges 28. However they will exert a minor frictional drag on the underside of the belt 15 and will provide a cleaning action, tending to scrape dust and accumula tions of debris off the underside of the belt, and will additionally provide a centering function to be described.

It is preferable that the belt 15 remains centered as closely as possible throughout its travel since wandering of the belt can lead to loss of load, damage to the belt particularly at its edges and even in some cases to loss of the belt from its supports. In order to provide good centering, the glides 26 and their edges 28 taper inwardly towards the centre of the belt as shown in Figure 2. Thus, if the belt were to wander slightly off line towards the left hand side of Figure 2, for example, the extra frictional drag on the belt at that side caused by contact with rather more of the edges 28 of the glides, would tend to push the belt back towards the centre line 27.

The problem of the belt wandering off line is normally very severe at the feedboot because large lumps of load material may fall onto the conveyor off centre. If this happens with the feedboot of the present invention, for example if a large lump of load material falls on the left hand side of the conveyor then the left hand half shell 13 tends to dip downwardly towards the centre of the conveyor, compressing its centre mount 18 and pivoting or rocking about its edge mount 17. This may encourage the load to tumble towards the centre line of the conveyor. Dipping of the half shell 13 causes a reduction in the friction between the belt and its support glides 26 where the centre portion of the belt 15 tends to lift off the dipped inner edge of the half shell 13 over the whole of its length. The belt has a tendency to move towards the position in which the friction is least and hence tends to push towards the lefthand side of the conveyor, forcing the belt towards the heavily loaded side of the conveyor.

It will therefore be seen that two effects can take place. Firstly the load tends to move inwardly towards the centre line 27 of the conveyor belt and secondly the belt itself tends to move towards the heavy load. In each instance, this is the reverse of what happens where a feedboot is provided with conventional resilient rollers. In that case, the belt tends to dip in the region below the load, preventing the heavy load from toppling towards to the centre line and, because the increased friction occurs under the load, the belt also tends to wander away from the heavily loaded side of the conveyor.

Naturally, since the belt 15 is permitted to wander slightly to compensate for uneven loading of the feedboot, it is necessary to provide constraining edge glides 30 to ensure that the belt cannot come off its supports.

A feed hopper or chute usually has depending skirts to restrict losses over the side of the troughed belt. The feedboot illustrated maintains the desired seal with these skirts, since downward dipping movement of the half shells is chiefly confined to the central region of the feedboot.

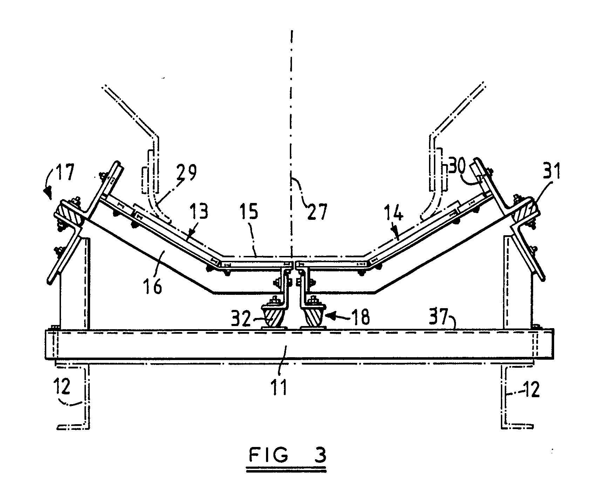

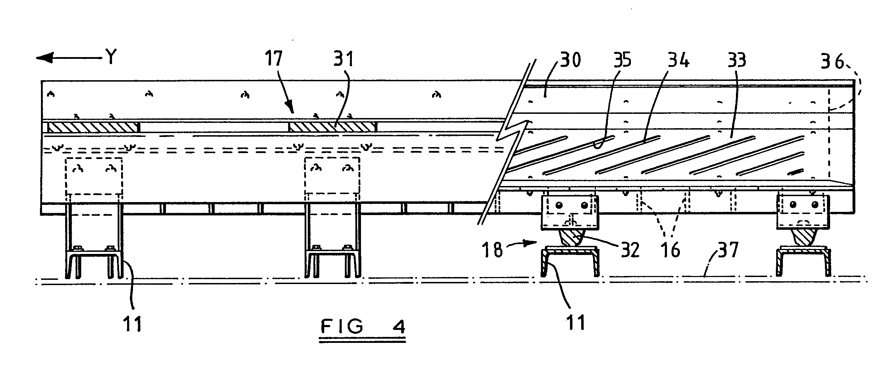

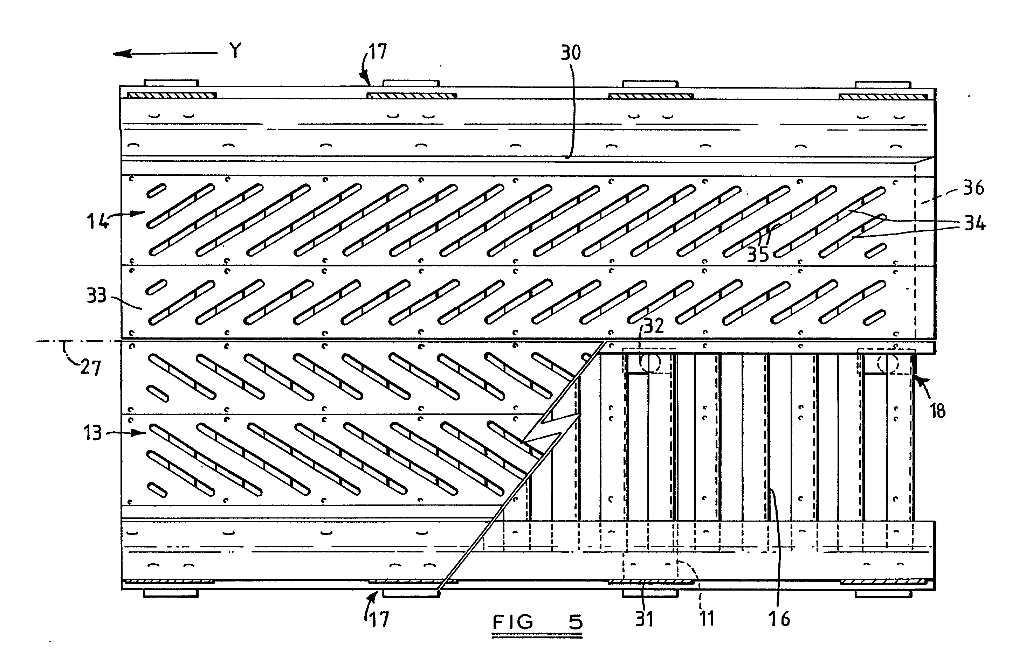

Turning to Figures 3 to 5 of the drawings, these illustrate an alternative form of feedboot for which identical parts will be given the same numbers as in the preceding embodiment.

In this embodiment the edge mounts generally indicated at 17, now include elastomeric elongate compression pads which may give better wear properties than the paired resilient bushes 21 and 22 of the previously described embodiment, one of which would have been in compression and the other in tension. It will be appreciated that rubber and other elastomeric materials are relatively weak in tension.

Instead of providing resilient edge mounts, pivotal mounts could be provided, the resilience then being derived from the centre mounts alone.

The centre mounts generally indicated at 18 comprise conical elastomeric buffers 32.

The individual glides 26 of the previously described embodiment are replaced by low friction plates 33 which optionally have elongate slots 34 providing friction edges 35 tapering inwardly towards the centre line of the conveyor. These plates 33 function in a similar way to the individual glides 26 but reduce the assembly time for the feedboot and also make it a more speedy matter to repair the feedboot.

It will be seen that the leading edge 36 of the plate 33 is chamfered so as to provide a smooth entry point for the conveyor belt. The trailing edge of the plate 33 is also chamfered to provide a smooth transition point for the belt.

The plates 33 have through slots 34 but could equally well have indentations in order to provide friction edges 35. However the use of slots is preferred so that the scraping action on the underside of the belt enables any debris scraped from the belt to pass through the slots. This may be caught on a decking plate such as that shown at 37 in Figure 3. The debris can then be removed from the decking plate 37 at periodic intervals, and is prevented from falling onto the return run of the belt. Similar decking plates may be provided in the Figure 1 embodiment.

# Claims

1. A feedboot characterised in that it comprises a pair of supporting structures (13, 14), each adapted to support part of the width of a troughed conveyor belt (15) and each having independent resilient mounting means (17, 18) so arranged that each supporting structure (13, 14) tends to dip downwardly towards the centre line (27) of the conveyor belt under load.

2. A feedboot according to Claim 1 further characterised in that only two supporting structures (13, 14) are provided, each adapted to support one half of the width of the troughed conveyor belt (15).

3. A feedboot according to Claim 1 or Claim 2 further characterised in that each supporting structure (13, 14) has a resilient mount (17) disposed at or adjacent its outer edge away from the centre line of the conveyor (27).

4. A feedboot according to any preceding claim further characterised in that each supporting (13, 14) has a resilient mount (18) adjacent the centre line (27) of the conveyor.

5. A feedboot according to Claim 4 further characterised in that each supporting structure (13, 14) has a pivotal mount disposed at or adjacent its outer edge away from the centre line (27) of the conveyor.

6. A feedboot according to any one of Claims 3 to 5 further characterised in that the or each resilient mount (17, 18) comprises a coiled compression or extension spring (25).

7. A feedboot according to any one of Claims 3 to 5 further characterised in that the or each resilient mount (17, 18) includes an elastomeric material (21, 22; 32).

8. A feedboot according to any preceding claim wherein each supporting structure (13, 14) has a generally elongate arcuate support surface of low friction material (26; 33).

9. A feedboot according to Claim 8 further characterised in that the support surface of each supporting structure (13, 14) comprises a plurality of elongate formations (28; 35) such as slots, grooves or depressions, the elongate formations (28; 35) being inclined towards the centre line (27) of the conveyor belt in the intended direction (Y) of travel of the belt (15).

FIG 1

EP 0 304 520 A1

FIG 2

FIG 3

FIG 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | SOVIET INVENTIONS ILLUSTRATED, Section Mechanical, Week B09, 11th April 1979, abstract no. B 9514, Q35; & SU - A - 60 2423 (MOSC MINING INST.) 03-03-1978 | 1 | B 65 G 15/60 |
| A | EP-A-0 012 549 (CONVEYOR IMPROVEMENTS) * abstract * | 1 | |
| A | US-A-3 319 767 (BRETERNITZ et al.) * column 1, lines 11-38; figures 1-4 * | 1 | |
| A | DE-B-1 237 950 (SOCIET BERTIN & CIE.) * column 4, lines 26-40; figures 1-3, 9 * | 1 | |
| E | GB-A-2 188 018 (HABBERLEY) * whole document * | 1-9 | |
| | | | TECHNICAL FIELDS SEARCHED (Int. Cl.4) |
| | | | B 65 G 15/00 B 65 G 21/00 B 65 G 47/00 B 65 G 65/00 |

The present search report has been drawn up for all claims

| Place of search | Date of completion of the search | Examiner |
|---|---|---|
| BERLIN | 13-04-1988 | SIMON J J P |